# EUROPÄISCHE PATENTSCHRIFT

(11) **EP 0 839 502 B1**
(45) Veröffentlichungstag und Bekanntmachung des Hinweises auf die Patenterteilung: **30.07.2003**
(21) Anmeldenummer: 96810729.2
(22) Anmeldetag: 01.11.1996
(51) Int. Cl.: A61C 19/04

(54) **Paradontalsonde**
Periodontal probe
Sonde périodontale

(43) Veröffentlichungstag der Anmeldung: 06.05.1998
(73) Patentinhaber: KerrHawe SA, 6934 Bioggio (CH)
(72) Erfinder: Von Weissenfluh, Beat A., 6925 Gentilino (CH); Gozzi, Guido, Dr., 8305 Dietikon (CH); Kilcher, Beat, 6935 Bosco Luganese (CH)
(74) Vertreter: AMMANN PATENTANWAELTE AG BERN

(56) Entgegenhaltungen:
- WO-A-95/14404
- DE-A- 3 215 498
- US-A- 4 340 069
- US-A- 5 144 753

## Beschreibung

Die vorliegende Erfindung bezieht sich auf eine Parodontalsonde, mit einem Griffteil und einem Sondenteil gemäss Oberbegriff von Patentanspruch 1. Bei solchen Parodontalsonden wird anhand der Eindringtiefe der Sondenspitze die Tiefe der Zahnfleischtaschen gemessen, beispielsweise um festzustellen, ob die Paradontitis weiter fortgeschritten ist.

Eine Sonde gemäss Oberbegriff von Patentanspruch 1 ist aus der US-A-4 340 069 bekannt, wobei diese Sonde in beiden Ausführungsarten darauf gerichtet ist, dass die magnetische Kraft, bzw. die Abhebekraft einstellbar ist. Beim ersten Ausführungsbeispiel wird als magnetisches Mittel eine elektrische Spule verwendet, deren Erregung einstellbar ist, während im zweiten Ausführungsbeispiel ein zweigeteilter Magnetstab verwendet wird, wobei der Abstand der beiden Teile voneinander veränderbar ist, um die magnetische Kraft einzustellen. Die Anzeige der erreichten Kraft wird entweder optisch oder akustisch gegeben, wobei die Signale elektrisch erzeugt werden.

Es ist von diesem Stand der Technik ausgehend Aufgabe der vorliegenden Erfindung, eine Parodontalsonde anzugeben, die es gestattet, die aufzubringende Kraft genau voreinzustellen und das Erreichen dieser Kraft wirkungsvoll dem Zahnarzt zu vermitteln. Diese Aufgabe wird mit der Parodontalsonde gemäss Patentanspruch 1 gelöst. Weitere Ausführungsformen und vorteilhafte Ausbildungen sind in den abhängigen Ansprüchen definiert.

Die Erfindung wird im Folgenden anhand einer Zeichnung eines Ausführungsbeispiels näher erläutert.
- Figur 1: zeigt den Sondenteil der erfindungsgemässen Parodontalsonde in zwei verschiedenen Stellungen bezüglich des Griffteils, und
- die Figuren 2 und 3: zeigen zwei Messdiagramme mit zwei verschiedenen Sondierfrequenzen.

Die Sonde weist ein Griffteil 1 und ein Sondenteil 2 mit Spitze 3 auf. Zur besseren Handhabung weist das Griffteil Riffelungen 4 auf. Die Spitze 3 mit ihrem abgerundeten Ende 5 ist in einem stumpfen Winkel von etwa 105° zum übrigen Sondenteil angeordnet, während das vordere Griffteilende 6 gegenüber dem Griffteil mit den Riffelungen 4 leicht in die andere Richtung geknickt ist. Das hintere, der Spitze 5 entgegengesetzten Ende 7 des Sondenteils ist als Zapfen ausgebildet, der in einer Bohrung 8 im vorderen Griffteil 6 um die Drehachse 9 drehbar angeordnet ist.

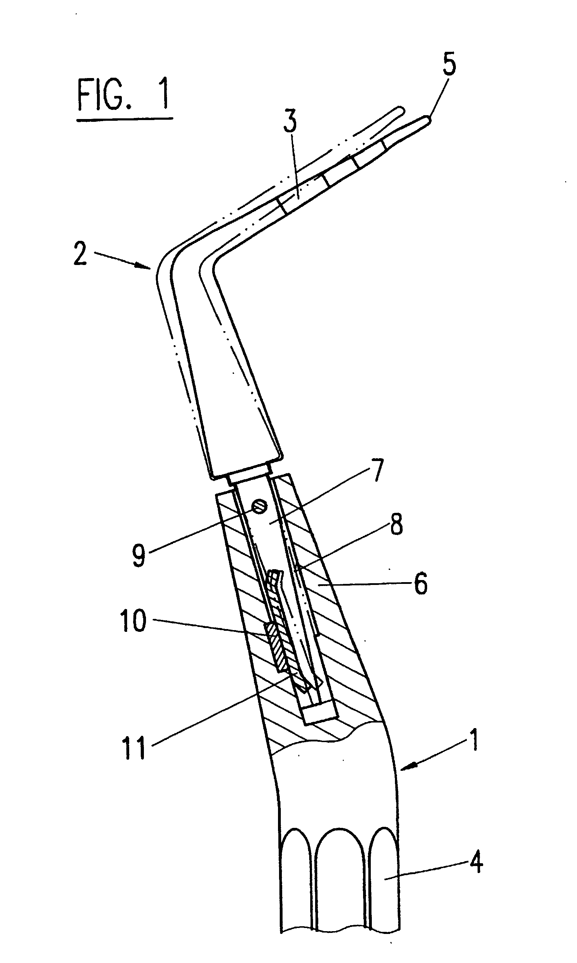

In Figur 1 ist ausserdem dargestellt, dass bei Druck auf das Spitzenende 5 die Spitze um die Achse 9 dreht und in die strichpunktierte Stellung gebracht wird. Während bei den Sonden gemäss dem vorgenannten Stand der Technik das Ende der Kippbewegung angezeigt wird, um einen gewissen Kraftaufwand zu signalisieren, wird bei der vorliegenden Erfindung das Sondenteil mit der Spitze in der Ruhelage, d. h. wie ausgezogen dargestellt, mittels magnetischen Mitteln festgehalten.

In vorliegendem Ausführungsbeispiel ist in der Bohrung 8 des Griffteils ein Magnetplättchen 10 eingelassen, das beispielsweise eine Abmessung von 3 x 1,5 x 0,65 mm aufweisen und aus einer Samarium-Kobalt-, oder Neodym-Eisen-Bor-Legierung gefertigt sein kann. Dem Magnet-Plättchen gegenüber befindet sich auf dem Sondenende 7 ein Anker 11, der beispielsweise die Abmessungen 6,5 x 1,5 x 0,6 mm aufweisen kann. Für den Anker werden bevorzugt ferromagnetische Materialien, z.B. ferristischer rostfreier Stahl eingesetzt. Die Abmessungen und das Material des Magnet-Plättchens hängen vom gewünschten Kraftaufwand einerseits und vom Hebelverhältnis Spitze zu Sondenende, bezogen auf den Drehpunkt 9, andererseits ab.

Bei dieser Anordnung wird bei Druck auf das Spitzenende 5, d. h. beim Einführen in eine Zahnfleischtasche oder dergl., bei einer gewissen Kraftentfaltung das Sondenteil vom Griffteil abgehoben, d. h. die magnetische Anziehungskraft zwischen dem Magnet und dem Anker überwunden, wodurch das Sondenteil in die zweite, strichpunktiert dargestellte Lage umschnappt, wobei dieses Umschnappen als Erschütterung merkbar signalisiert wird. Untersuchungen haben gezeigt, dass eine Kraft von 0,20 - 0,30 N, vorzugsweise 0,23 N, sehr gute Messergebnisse ergeben, ohne irgendwelche Schädigungen hervorzurufen.

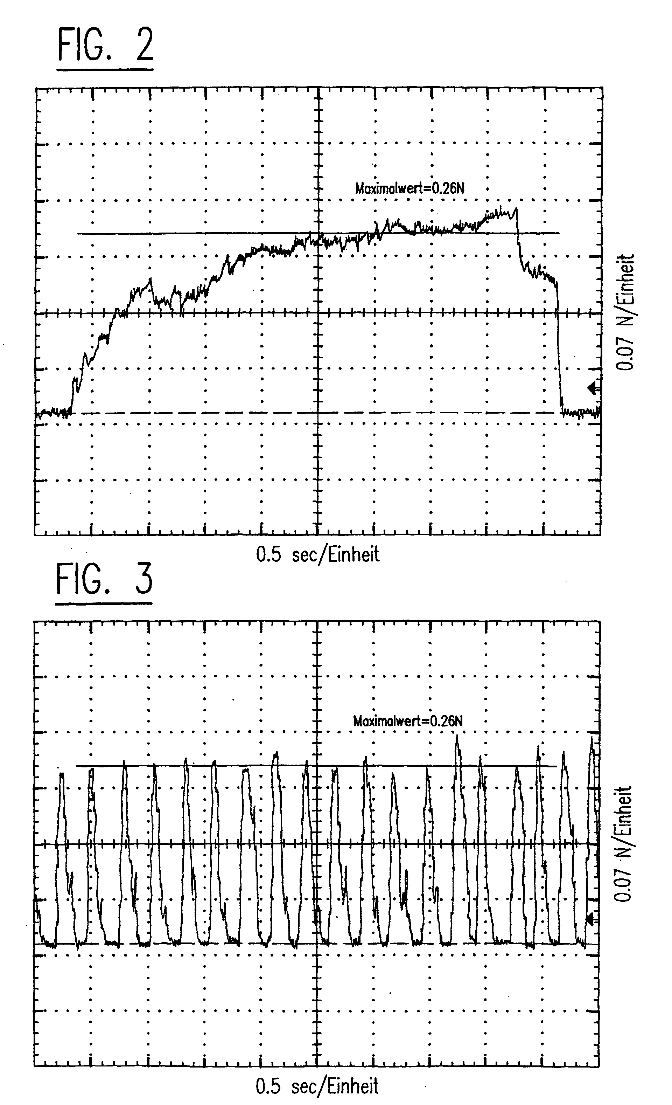

Aus den Figuren 2 und 3 geht hervor, dass die Frequenz der Sondierung, bzw. die Geschwindigkeit des Eindringens in die auszumessende Zahnfleischtasche keinen nenenswerten Einfluss auf die Ablösekraft hat. In Figur 2 ist eine langsame Sondierfrequenz, d.h. ein langsames Eindringen bis zum Erreichen des Maximalwertes von 0,26 N zum Ablösen des Sondenteils über einen Zeitraum von ca. 4,0 bis 4,5 sec aufgezeichnet, während in Figur 3 diese Sondierfrequenz wesentlich höher ist, d.h. diese Kraft nach bereits ca. 0,25 sec erreicht wurde. Bei beiden Sondier-Frequenzen ergab sich der annähernd gleiche Maximalwert.

Daraus folgt, dass der Zahnarzt mit dieser Sonde beliebig schnell oder langsam und mit beliebiger Frequenz in eine Zahnfleischtasche eindringen kann und die Maximalkraft jedesmal dieselbe ist. Dadurch ist es möglich, unabhängig von seiner Arbeitsweise genaue Vergleichsmessungen zu erhalten.

Es ist möglich, sowohl das Hebelverhältnis Spitze zu Sondenteil als auch die Abmessungen des Magnetplättchens zu ändern und auch, den Ort des Magneten, bzw. Ankers zu verändern, wobei das Magnetplättchen auch am Sondenende und der Anker im Griffteil angeordnet sein können. Die gesamte Parodontalsonde, mit Ausnahme der magnetischen Mittel und der Achse 9, werden vorzugsweise aus Kunststoff gefertigt. Es ist auch möglich, zwischen dem Sonden- und Griffteil Dichtungsmittel anzubringen, um das Innere des Griffteils vor eindringenden Flüssigkeiten oder Dampf zu schützen.

## Patentansprüche

1. Parodontalsonde, mit einem Griffteil (1) und einem Sondenteil (2) mit einer Spitze (3), die Mittel aufweist, um die beim Eindringen in das zu untersuchende Gewebe aufgewandte Kraft anzuzeigen, wobei das Sondenende (7) als Zapfen ausgebildet und in einer Bohrung (8) im Griffteil (1) gelagert ist wobei das Sondenteil am Griffteil um eine Achse (9) drehbar gelagert ist und an ihrem der Untersuchungsspitze (5) entgegengesetzten Ende (7) erste magnetische Mittel (10, 11) aufweist, die mit entsprechenden, im Griffteil angeordneten, zweiten magnetischen Mitteln (11, 10) zusammenwirken derart, dass in der Ruhestellung das Sondenende (7) an den zweiten magnetischen Mitteln anliegt und bei einem Druck auf die Untersuchungsspitze (5) sich dieses Sondenende von den zweiten magnetischen Mitteln löst und ein spürbares Signal erzeugt, **dadurch gekennzeichnet, dass** die magnetischen Mittel aus einem Magnetplättchen (10) und einem Ankerplättchen (11) bestehen, wobei ein Plättchen am Sondenzapfen und das andere Plättchen gegenüber in der Bohrung (8) befestigt ist, wobei das Verhältnis Sondenteil (2) zu Spitze (3), bezogen auf den Drehpunkt (9) und die Dimension und das Material des Magnetplättchens (10) unveränderbar eingestellt und derart gewählt sind, dass das Sondenende bei einer bestimmten unveränderbaren Kraft auf die Untersuchungsspitze vom Griffteil abhebt.

2. Sonde nach Anspruch 1, **dadurch gekennzeichnet, dass** das Sondenende bei einer bestimmten Kraft von 0,20 - 0,30 N vom Griffteil abhebt.

3. Sonde nach Anspruch 1 oder 2, **dadurch gekennzeichnet, dass** das Magnetplättchen (10) aus einer Samarium-Kobalt-, oder Neodym-Eisen-Bor-Legierung eine Dimension von 2,5-3,5 x 1,0-2,0 x 0,50-0,70 mm aufweist.

## Claims

1. Periodontal probe, comprising a handle portion (1) and a probe portion (2) with a tip (3), and including means for indicating the force applied while penetrating into the tissue to be examined, the probe end (7) being in the form of a peg and being journalled in a bore (8) of the handle portion (1), and the probe portion being rotatably mounted on a pivot (9) in the handle portion and including first magnetic means (10, 11) at its end (7) opposite the exploring tip (5) which co-operate with corresponding second magnetic means (11, 10) arranged in the handle portion in such a manner that in the rest position, the probe end (7) contacts the second magnetic means, and when a pressure is applied to the exploring tip (5), the probe end is lifted off from the second magnetic means and produces a perceptible signal, **characterised in that** the magnetic means are composed of a small magnetic plate (10) and of a small armature plate (11), one of the plates being fastened to the peg of the probe and the other one opposite the first one in the bore (8), the ratio between the probe portion (2) and the tip (3), related to the pivot point (9), as well as the dimensions and the material of the magnetic plate (10) being invariably adjusted and chosen such that the probe end is lifted off from the handle portion when a determined, invariable force acts upon the exploring tip.

2. Probe according to claim 1, **characterised in that** the probe end is lifted off from the handle portion in the presence of a determined force of 0.20 to 0.30 N.

3. Probe according to claim 1 or 2, **characterised in that** the magnetic plate (10) made of a samarium-cobalt or a neodymium-iron-boron alloy has a size of 2.5 to 3.5 x 1.0 to 2.0 x 0.5 to 0.7 mm.

## Revendications

1. Sonde parodontale avec une partie manche (1) et une partie sonde (2) munie d'une pointe (3), comprenant des moyens permettant d'indiquer la force dépensée pendant la pénétration dans le tissu à examiner, l'extrémité (7) de la sonde présentant la forme d'un tenon et étant logée dans un alésage (8) dans la partie manche (1), la partie sonde étant logée dans la partie manche de manière rotative autour d'un axe (9) et présentant, à son extrémité (7) opposée à la pointe d'exploration (5), des premiers moyens magnétiques (10, 11) coopérant avec des deuxièmes moyens magnétiques (11, 10) correspondants, agencés dans la partie manche, de telle manière qu'en position de repos, l'extrémité (7) de la sonde est en contact avec les deuxièmes moyens magnétiques, et que ladite extrémité de la sonde se détache des deuxièmes moyens magnétiques lorsqu'une pression agit sur la pointe d'exploration (5) en produisant un signal perceptible, **caractérisée en ce que** les moyens magnétiques sont composés d'une plaquette magnétique (10) et d'une plaquette servant de palette (11), l'une des plaquettes étant fixée au tenon de la sonde et l'autre en face de celle-ci dans l'alésage (8), le rapport entre la partie sonde (2) et la pointe (3), par référence au point d'appui, ainsi que les dimensions et le matériau de la plaquette magnétique (10), étant invariablement ajustés et choisis de telle manière que l'extrémité de la sonde décolle de la partie manche lorsqu'une force déterminée et invariable agit sur la pointe d'exploration.

2. Sonde selon la revendication 1, **caractérisée en ce que** l'extrémité de la sonde décolle de la partie manche lors d'une force déterminée de 0,20 à 0,30 N.

3. Sonde selon la revendication 1 ou 2, **caractérisée en ce que** la plaquette magnétique (10) en un alliage de samarium-cobalte ou de néodyme-fer-bore présente des dimensions de 2,5-3,5 x 1,0-2,0 x 0,50-0,70 mm.
